(19) Europäisches Patentamt / European Patent Office / Office européen des brevets

(11) **EP 2 654 523 B1**

(12) **EUROPEAN PATENT SPECIFICATION**

(45) Date of publication and mention
of the grant of the patent:
**16.12.2015 Bulletin 2015/51**

(51) Int Cl.:
***A47J 31/18*** *(2006.01)*

(21) Application number: **11811571.6**

(22) Date of filing: **19.12.2011**

(86) International application number:
**PCT/IB2011/055769**

(87) International publication number:
**WO 2012/085813 (28.06.2012 Gazette 2012/26)**

(54) **METHOD AND SYSTEM FOR BREWING INGREDIENTS IN A SOLVENT, APPARATUS USING SAID SYSTEM**

VERFAHREN UND SYSTEM ZUM BRÜHEN VON INHALTSSTOFFEN IN EINEM LÖSUNGSMITTEL UND VORRICHTUNG MIT DIESEM SYSTEM

PROCÉDÉ ET SYSTÈME DE BRASSAGE D'INGRÉDIENTS DANS UN SOLVANT, APPAREIL UTILISANT LEDIT SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2010 PCT/CN2010/080104**

(43) Date of publication of application:
**30.10.2013 Bulletin 2013/44**

(73) Proprietor: **Koninklijke Philips N.V.
5656 AE Eindhoven (NL)**

(72) Inventors:
• **KELLY, Declan, Patrick
  NL-5656 AE Eindhoven (NL)**
• **ZHOU, Qi
  NL-5656 AE Eindhoven (NL)**
• **WANG, Guangwei
  NL-5656 AE Eindhoven (NL)**

(74) Representative: **Coops, Peter
Philips
Intellectual Property & Standards
P.O. Box 220
5600 AE Eindhoven (NL)**

(56) References cited:
**US-A1- 2001 048 958     US-A1- 2009 263 550
US-B1- 7 036 687**

## Description

**FIELD OF THE INVENTION**

The invention relates to a method and a system for brewing ingredients in a solvent.

The invention may be used in the field of beverage preparation.

**BACKGROUND OF THE INVENTION**

Preparing beverages by brewing (raw) ingredients in a solvent is a known process. For example, the preparation of tea is done by brewing, i.e. infusing, tea leaves (or tea bags) used as ingredients, in hot/boiling water used as the solvent. The same process may be followed when beverages are prepared from different ingredients, such as various herbs or plant leaves. After a given time duration determined by the user, ingredients are taken out of the solvent, and the beverage is ready for drinking.

However, the time duration for brewing ingredients in the solvent depends on various intrinsic characteristics of the ingredients, and those characteristics are most of the time unknown to users. For example, there are different categories of tea that can be used in a brewing process, such as Green tea, Black tea, Oolong tea, Pu'er tea. Within each category, a large number of variations in characteristics exist which depend on, for example, the size of leaves, the quality of leaves, the origin of leaves.

As a consequence, users cannot easily control the brewing of ingredients to achieve an optimal brew which would result in an optimal taste of the beverage. Moreover, even if the same user prepares the brewing of a given ingredient, from one brewing to another, large inconsistencies in the obtained beverage may result.

It is to be noted that US patent document US 7,036,687 B1 and US patent application US 2001/0048958 A1 disclose devices for dispensing drinks made by dilution of a concentrate with water whereby the conductivity of the resulting mixture is used as an indicator of the level of dilution of the concentrate and to control the device operations based on this measurement.

It is further to be noticed that US patent application US 2009/0263550 A1 discloses an infusion device in which the electric conductivity of a solute in the beverage is measured in addition to a timer to control the infusion process.

**OBJECT AND SUMMARY OF THE INVENTION**

It is an object of the invention to propose an improved method and system for brewing ingredients in a solvent. The invention is defined by the independent claims. The dependent claims define advantageous embodiments.

To this end, the system according to the invention comprises:

- a first unit for measuring a change of the electro-conductivity of said solvent,
- a second unit for comparing said change of the electro-conductivity with a predetermined threshold, to generate a signal indicating that the ingredients should be separated from the solvent, wherein the first unit is adapted to measure a change of the electro-conductivity, defined as the ratio of:
- the difference between the electro-conductivity of the solvent at the time of measurement by the first unit, and the electro-conductivity of the solvent at a previous time of measurement by the first unit, to
- the difference between the time of measurement by the first unit, and said previous time of measurement.

The electro-conductivity of the solvent is used as an indication of the brewing status, i.e. an indication of the amount of solids/compounds in the ingredients which have been dissolved in the solvent. This system allows determining when the brewing of ingredients has to be stopped, without the need for a user to have a preset brewing time duration. The brewing of a given type of ingredients can thus be consistently reproduced, resulting in an optimal and consistent taste of the solvent (i.e. beverage) obtained after brewing.

The ratio calculated indicates a local rate of change of the electro-conductivity in the solvent. Using this rate of change is advantageous to indicate that the brewing can be stopped for the reason that most compounds in the ingredients have already been dissolved in the solvent.

In a preferred embodiment, the system according to the invention is such that the first unit is adapted to measure a change of the electro-conductivity, defined as the difference between the electro-conductivity of the solvent at the time of measurement by the first unit, and the electro-conductivity of the solvent at the starting time of the brewing operation.

By performing a first measurement of the solvent at the start of the brewing operation, and a second measurement of the solvent at the end of the brewing operation, the change of the electro-conductivity of the solvent is calculated in a simple and cost-effective way.

In a preferred embodiment, the system according to the invention is such that the first unit is adapted to measure a change of the electro-conductivity, defined as the ratio of:

- the difference between the electro-conductivity of the solvent at the time of measurement by the first unit, and the electro-conductivity of the solvent at the starting time of the brewing operation, to
- the difference between the time of measurement by the first unit, and the starting time of the brewing operation.

The ratio calculated indicates a global rate of change of the electro-conductivity in the solvent, from the start of the brewing operation. Using this rate of change is advantageous to indicate the amount of compounds still left in the ingredients, which may be useful information in the case that brewing includes multiple and successive brewings (i.e. using the initially used ingredients but with a fresh solvent). In other words, this global rate shows how long it takes to reach a target which relates to how much is left in the ingredients, which can be useful information in the case of multiple and successive brewings using the same initial ingredients.

In a preferred embodiment, the system according to the invention further comprises a system connected to said second unit for separating, upon the generation of said signal, the ingredients from the solvent.

Separating the ingredients from the solvent allows stopping the brewing operation in an efficient manner.

In a preferred embodiment, the system according to the invention, the first unit is further adapted to measure a subsequent change of the electro-conductivity of the solvent, said subsequent change of the electro-conductivity being defined as the difference between the electro-conductivity of the solvent at the time of separating the ingredients from the solvent, and the electro-conductivity of the solvent at a subsequent time; and wherein said second unit is further adapted to compare said subsequent change of the electro-conductivity with an additional predetermined threshold, to generate a signal indicating that a property of the solvent reflecting the solvent quality has changed.

This allows giving indication to a user with respect to a change of quality of the solvent after the ingredients have been separated from the solvent, for example to indicate a decrease of the solvent quality after a period of time.

In a preferred embodiment, the system according to the invention further comprises a third unit adapted to generate a signal reflecting the brewing progress, based on the ratio between said change of the electro-conductivity and said predetermined threshold.

This allows giving feedback to a user with respect to the progress of the brewing operation.

The invention also relates to an apparatus for preparing a beverage by brewing ingredients in a solvent, this apparatus comprising:

- a system according to the invention, as described hereinabove,
- a memory for storing a plurality of thresholds, each threshold being associated with a given type of ingredients,
- means for selecting a type of ingredients to be brewed,
- means for setting the predetermined threshold value associated with the selected type of ingredients.

This apparatus allows a user to select the type of ingredients to be brewed, and to achieve optimal brewing of these ingredients, without any further user actions.

The invention also relates to an apparatus for preparing a beverage by brewing ingredients in a solvent, this apparatus comprising:

- a system according to the invention as described hereinabove,
- a memory for storing a plurality of thresholds, each reflecting a different characteristic of the beverage to be prepared,
- means for selecting a characteristic of the beverage to be prepared,
- means for setting the predetermined threshold value associated with the selected characteristic.

This apparatus allows a user to select the characteristics of the beverage to be prepared, for example the "strength of the taste" of the beverage, and to achieve optimal brewing of the ingredients, without any further user actions.

The invention also relates to an apparatus for preparing a beverage by brewing ingredients in a solvent, this apparatus comprising:

- a first unit for measuring a variation of the electro-conductivity of said solvent, defined as the difference between the electro-conductivity of the solvent at the time of measurement by the first unit, and the electro-conductivity of the solvent at the starting time of the brewing operation.
- means for storing said variation of the electro-conductivity in a memory, said variation being intended to be compared to a change of the electro-conductivity of the solvent during a next brewing of the same ingredients, to generate a signal indicating that the ingredients should be separated from the solvent.

This apparatus allows a user to store in a memory the brewing parameters of a brewing operation having resulted in a beverage having a characteristic preferred by the user, so that for a subsequent brewing, this user can directly select these stored parameters and obtain the same preferred beverage.

The invention also relates to methods comprising various steps carried out by a system and apparatus according to the invention.

Detailed explanations and other aspects of the invention will be given below.

## BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:

Fig.1 depicts a system according to the invention for brewing ingredients in a solvent,

Fig.2 illustrates an example of the electro-conductivity variation of a solvent, according to different degrees Brix values of the solvent,

Fig.3 illustrates an example of a variation of the electro-conductivity over time,

Fig.4 illustrates an example of a variation of the electro-conductivity over time,

Fig.5 illustrates an example of a variation of electro-conductivity over time,

Fig.6 and Fig.7 depict a first embodiment of a system for separating the ingredients from the solvent according to the invention,

Fig.8 depicts a second embodiment of a system for separating the ingredients from the solvent according to the invention,

Fig.9 depicts a first apparatus according to the invention for preparing a beverage by brewing ingredients in a solvent,

Fig.10 depicts a second apparatus according to the invention for preparing a beverage by brewing ingredients in a solvent,

Fig.11 depicts a third apparatus according to the invention for preparing a beverage by brewing ingredients in a solvent,

Fig.12 depicts a system according to the invention for generating a signal reflecting the progress of the brewing operation,

Fig.13 depicts a method according to the invention of brewing ingredients in a solvent,

Fig.14 depicts a method according of the invention of preparing a beverage by brewing ingredients in a solvent,

Fig.15 depicts a method according of the invention of preparing a beverage by brewing ingredients in a solvent,

Fig.16 depicts a method according of the invention of preparing a beverage by brewing ingredients in a solvent.

## DETAILED DESCRIPTION OF THE INVENTION

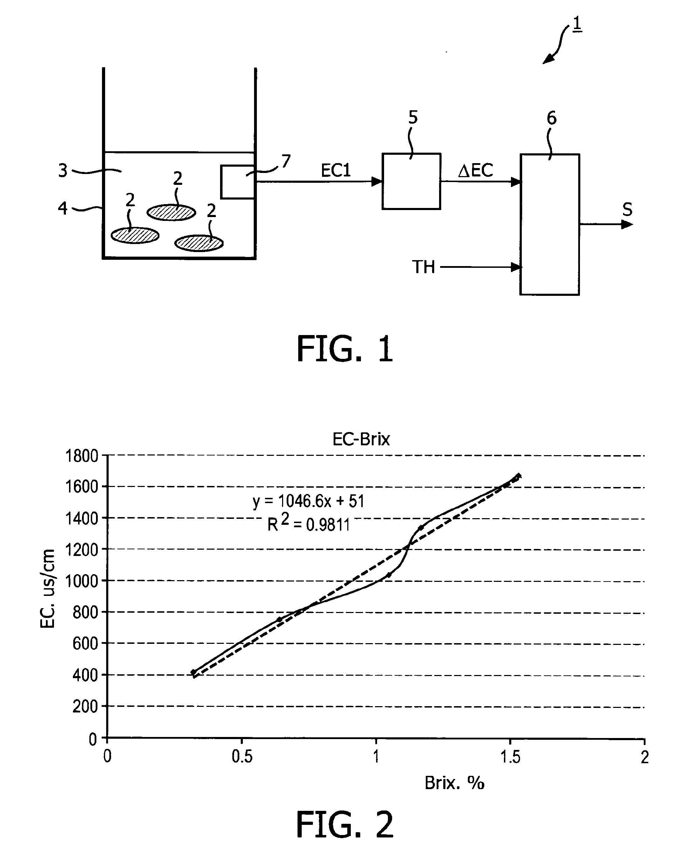

Fig.1 depicts a system 1 for brewing ingredients 2 in a solvent 3. ingredients 2 in a solvent 3 are placed in a container 4. For example, ingredients may correspond to tea leaves, coffee, herbs, roots, fruits, or a mix of those ingredients... For example, the solvent may correspond to water, mineral water, tap water, salted water, alcohol, or a mix of those solvents.

The system comprises:

- a first unit 5 for measuring a change of the electro-conductivity $\Delta EC$ of said solvent,
- a second unit 6 for comparing said change of the electro-conductivity $\Delta EC$ with a predetermined threshold TH, to generate a signal S indicating that the ingredients should be separated from the solvent.

The present invention is based on the fact that during the brewing of ingredients in the solvent, the electro-conductivity (EC) of the solvent varies linearly with the so-called degree Brix of the solvent.

The degree Brix represents the amount of dissolved solids/compounds in the solvent, so that in the present case it can be used to quantify the amount of dissolved solids/compounds extracted from the ingredients during the brewing operation. In other words, the degree Brix reflects the concentration level of the solvent, i.e. the strength of the solvent in terms of taste if the solvent is intended to be drunk by a user.

Taking into consideration that measuring the amount of dissolved solids/compounds in the solvent via a direct measurement of the degree Brix would require costly equipment (e.g. a refractometer) that can hardly be implemented in a system for brewing ingredients intended to be used by a user in a private environment, the amount of dissolved solids/compounds in the solvent is indirectly measured via measuring the EC of the solvent, by exploiting the linearity of variation between EC and degree Brix.

Fig.2 illustrates an example of the EC variation of a solvent, according to different degree Brix values of the solvent. In this example, leaves of green tea are used as ingredients in water used as the solvent, with a concentration of leaves of 20 grams per litre. This variation shows the linearity between EC and degree Brix. The unit of EC is micro-Siemens/cm ($\mu$S / cm), and the unit of degree Brix is a percentage by mass of the solvent (% / weight).

In the system according to Fig.1, the first unit 5 for measuring a change of the electro-conductivity $\Delta EC$ is connected to an EC sensor 7. The EC sensor 7 is intended to generate the EC value EC1 of the solvent contained in container 4. It may be placed at an appropriate location in the container, such as along a wall of container 4, as illustrated in Fig.1.

Any types of EC sensor known as such in the art may be used, such as an electrode-type sensor based on so-called voltammetry methods, and an inductance-type sensor based on the induction principle. Preferably, since the solvent may be heated during brewing, an EC sensor having temperature-compensation is preferred, so as to generate accurate EC values, independently of the solvent temperature.

The first unit 5 is adapted to measure a change of the EC of solvent 3. In other words, the first unit 5 is adapted to make a relative measurement, not an absolute measurement. A relative measurement is preferred, so that solids/compounds that could already be present in the solvent at the start of the brewing operation are not taken into account in the measurement. For example, if tap water is used as the solvent for the brewing operation, this solvent may initially contain some minerals or different dissolved solids/compounds that should not be taken into account for determining the real contribution of dissolved solids/compounds extracted from the ingredients during brewing. The first unit 5 is adapted to measure the change of EC of solvent 3 according to different modes that may be used for different purposes.

Mode1

According to a first mode, the first unit 5 is adapted to measure a change of the electro-conductivity ΔEC, defined as the difference between the electro-conductivity EC_t1 of the solvent at the time t1 of measurement by the first unit, and the electro-conductivity EC_t0 of the solvent at the starting time t0 of the brewing operation.

To this end, the first unit 5 comprises a memory (not shown) to store EC_t0.

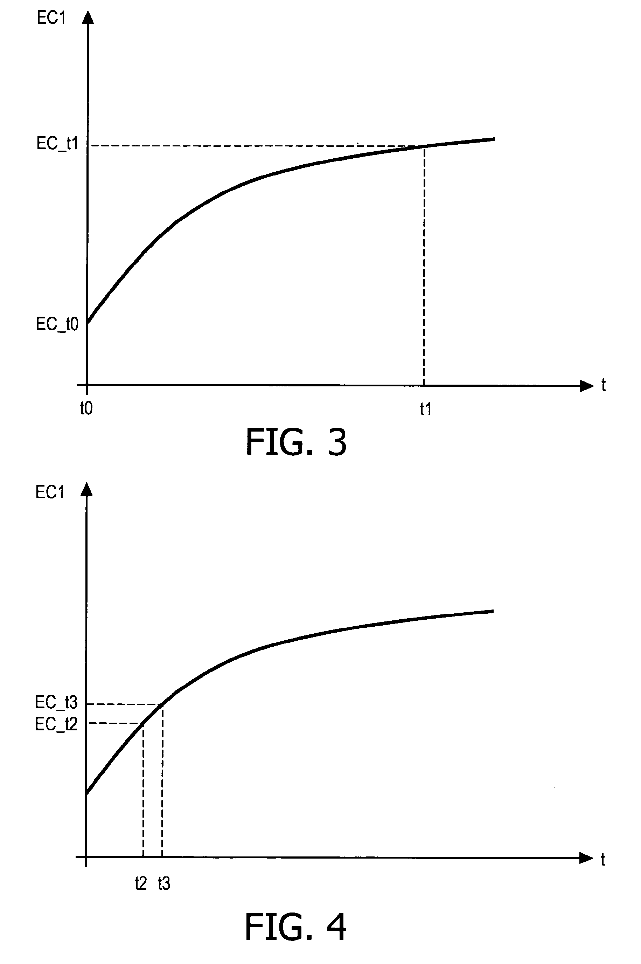

Fig.3 illustrates an example of a variation of EC1 over time.

In this first mode, ΔEC is expressed as:

$$\Delta EC = (EC\_t1 - EC\_t0)$$

In this first mode, the second unit 6 makes a comparison between the measured ΔEC and a predetermined threshold TH. In this case, ΔEC reflects the amount of solids/compounds of the ingredients dissolved in the solvent so far, and the threshold TH corresponds to a given change of the EC value at which the brewing is considered optimal in terms of amount of solids/compounds of the ingredients dissolved in the solvent, resulting in an optimal taste of the solvent. When the measured ΔEC reaches the threshold TH, it means that the materials have dissolved sufficient solids/compounds in the solvent, and that this solvent now has optimal taste/flavour. As a consequence, the second unit 6 generates signal S indicating that ingredients and solvent have to be separated, to avoid that the solids/compounds of the ingredients continue to dissolve in the solvent, which could badly affect the taste of the solvent. For example, signal S may change from a low level "0" to a high level "1" to indicate that ingredients and solvent have to be separated. For a given material (or a given mix of materials) intended to be brewed with a given solvent (or a given mix of solvents), the threshold TH may be previously determined experimentally as follows. For example, during brewing, the change of ΔEC is regularly measured, and for each measurement of ΔEC, a user (or a group of users) tastes the flavour of the solvent. When the flavour of the solvent is considered optimal, for example in view of various criteria such as strength, bitterness, sweetness..., the corresponding ΔEC is chosen as threshold TH. In a system according to the invention, the threshold TH is thus stored in a memory (not shown) with a view to being used by the second unit 6 for a similar brewing operation.

Mode2

According to a second mode, the first unit 5 is adapted to measure a change of the electro-conductivity ΔEC, defined as the ratio of:

- the difference between the electro-conductivity EC_t3 of the solvent at the time t3 of measurement by the first unit, and the electro-conductivity EC_t2 of the solvent at a previous time t2 of measurement by the first unit, to
- the difference between the time t3 of measurement by the first unit, and said previous time t2 of measurement.

To this end, the first unit 5 comprises a clock (not shown) to measure the elapsed time of the brewing operation, and a memory (not shown) to store EC_t2 and time t2.

Fig.4 illustrates an example of a variation of EC1 over time.

In this second mode, ΔEC is expressed as:

$$\Delta EC = (EC\_t3 - EC\_t2) / (t3-t2)$$

In this second mode, the second unit 6 makes a comparison between the measured ΔEC and a predetermined threshold TH. In this case, ΔEC reflects the speed of dissolution of solids/compounds of the ingredients in the solvent during a given time interval, and the threshold TH corresponds to a reference rate of the variation of EC during the same time interval. As brewing is not a very fast process, t3 and t2 may be such that the time difference (t3-t2) defining said time interval is in the order of minutes, for example from 1 to 10 minutes. When the measured ΔEC drops below the threshold TH, it means that too few solids/compounds of materials continue to be dissolved in the solvent. In other words, most of the solids/compounds have already been dissolved in the solvent, which may result in an optimal taste of the solvent, and thus it is no use to continue the brewing operation. As a consequence, the second unit 6 generates signal S indicating that ingredients and solvent have to be separated. For example, signal S may change from a low level "0" to a high level "1" to indicate that ingredients and solvent have to be separated. For a given material (or a given mix of materials) intended to be brewed with a given solvent (or a given mix of solvents), the threshold TH may be previously determined experimentally as follows. For example, during brewing, the change of ΔEC is regularly measured, and for each measurement of ΔEC, a user (or a group of users) tastes the flavour of the solvent. When the flavour of the solvent is considered optimal, for example in view of various criteria such as strength, bitterness, sweetness..., the corresponding ΔEC is chosen as threshold TH. In a system according to the invention, the threshold TH is thus stored in a memory (not shown) with a view to being used by the second unit 6 for a similar brewing operation.

Mode3

According to a third mode, the first unit 5 is adapted to measure a change of the electro-conductivity $\Delta EC$, defined as the ratio of:

- the difference between the electro-conductivity EC_t4 of the solvent at the time t4 of measurement by the first unit, and the electro-conductivity EC_t0 of the solvent at the starting time t0 of the brewing operation, to
- the difference between the time t4 of measurement by the first unit, and the starting time t0 of the brewing operation.

To this end, the first unit 5 comprises a clock (not shown) to measure the elapsed brewing time, and a memory (not shown) to store EC_t0 (and optionally to store time t0).

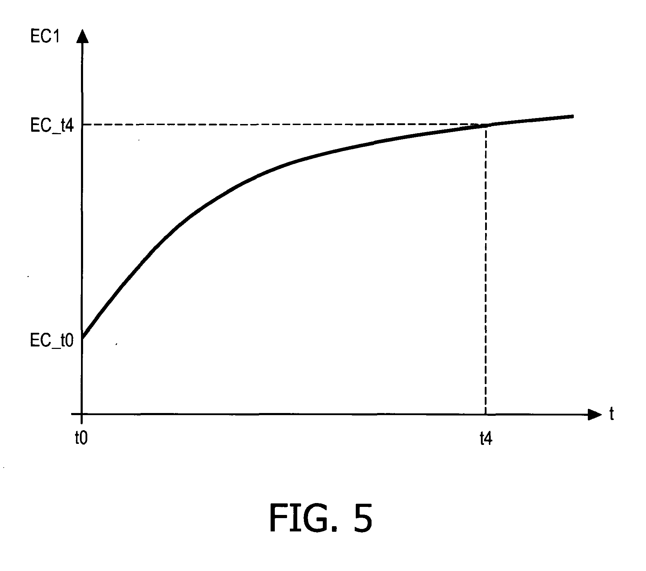

Fig.5 illustrates an example of a variation of EC1 over time.

In this third mode, $\Delta EC$ is expressed as:

$$\Delta EC = (EC\_t4 - EC\_t0) / (t4 - t0)$$

$$\Delta EC = (EC\_t4 - EC\_t0) / t4 \ (if \ t0 = 0)$$

In this second mode, the second unit 6 makes a comparison between the measured $\Delta EC$ and a predetermined threshold TH. This is similar to mode 2, the difference being that the time interval is defined from the start time of the brewing operation.

This mode can preferably be used in the case that ingredients require multiple successive brewings: the time it takes to reach the threshold TH indicates how much of the solids/compounds is left in the ingredients. If it takes too long to reach this threshold, it indicates that the raw ingredients have already dissolved most of their solids/compounds in the solvent, and that it is not relevant to perform another brewing with those ingredients.

The system according to the invention advantageously comprises a system connected to said second unit 6 for separating, upon generation of said signal S, the ingredients from the solvent. This system is described in the following.

Advantageously, in the system according to the invention, said first unit 5 is further adapted to measure a subsequent change of the electro-conductivity $\Delta EC$ of the solvent. The subsequent change of the electro-conductivity $\Delta EC$ is defined as the difference between the electro-conductivity EC_t5 of the solvent at the time t5

of separating the ingredients from the solvent, and the electro-conductivity EC_t6 of the solvent at a subsequent time t6. The second unit 6 is further adapted to compare said subsequent change of the electro-conductivity $\Delta EC$ with an additional predetermined threshold TH7, to generate a signal S1 indicating that a property of the solvent reflecting the solvent quality, has changed. The time t6 can advantageously be set periodically, for example every minute, to so that the subsequent change of the electro-conductivity $\Delta EC$ is measure at different successive instants over the time. Indeed, in most ingredients used for brewing, for example tea, contain many compounds that can be oxidized and subsequently deteriorate the drink quality (i.e solvent quality). For example, catechins can oxidize and induce deteriorate in taste and color of the solvent. Ascorbic acid oxidizes and subsequently reacts with amino acids to form brown colored compounds. Some flavour related unsaturated fatty acids oxidize and form volatile aldehydes and alcohols with the formation of aged and rancid taste. It is thus advantageous to know the change of solvent quality and warn consumers for any quality degradation of the solvent. The signal S1 can be displayed on a user interface.

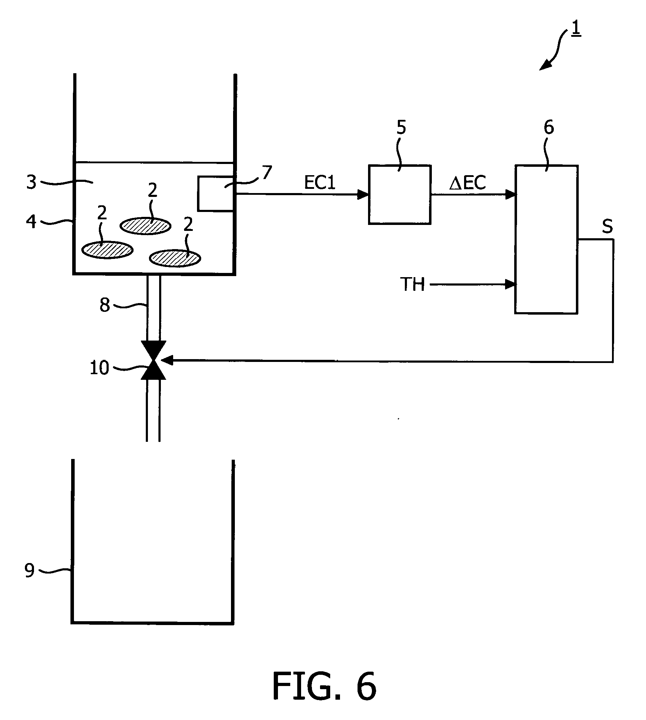

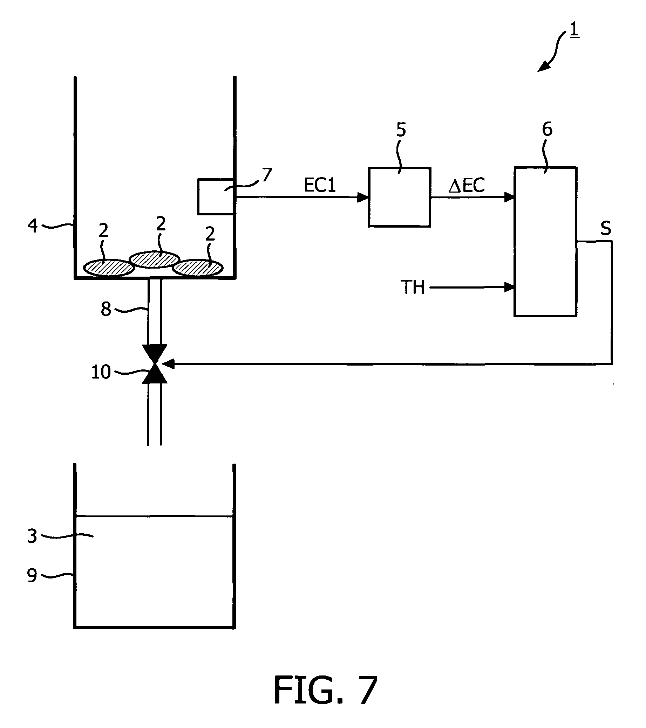

Fig.6 depicts a first embodiment of a system for separating the ingredients from the solvent. It comprises a pipe 8 which is connected to the bottom part of container 4, and which communicates with a second container 9 via a valve 10. The valve 10, which may correspond to an electro valve, is controlled by signal S generated by the second unit 6. When signal S indicates that the ingredients have to be separated from the solvent, the valve 10 opens, so that the solvent 3 leaves container 4 via pipe 8 and fills container 9. The ingredients thus remain in the container 4, as illustrated in Fig.7.

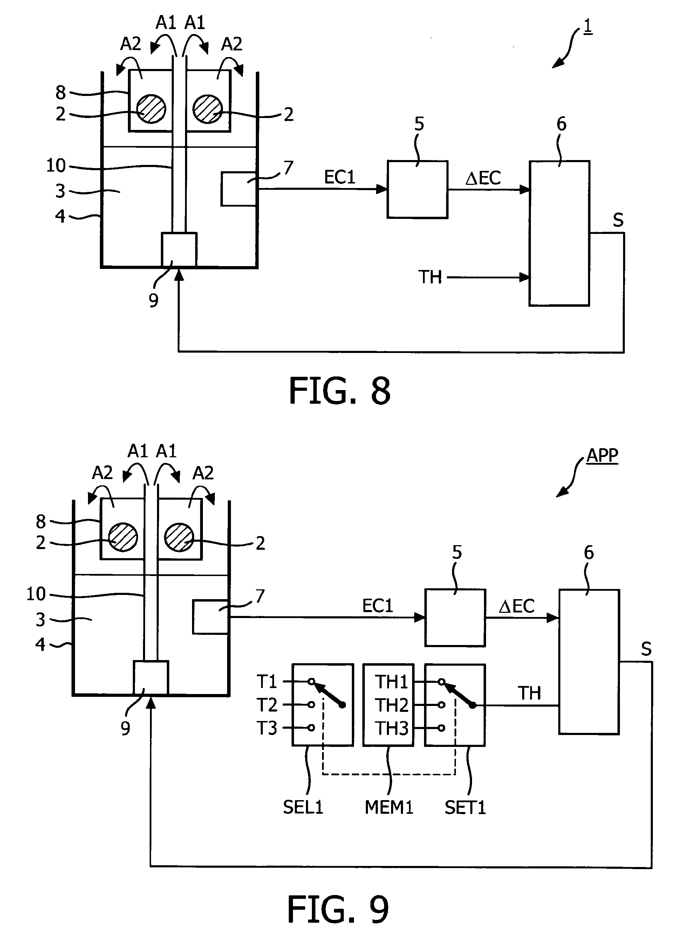

Fig.8 depicts a second embodiment of a system for separating the ingredients from the solvent. In this embodiment, an infuser 8 is placed in the container 4, and the infuser is intended to contain the ingredients 2. At the bottom part of the container 4, a pump 9 is placed, and the exit of the pump is connected to a pipe 10 reaching an upper part of infuser 8. The pump, for example an electrical pump, is intended to pump the solvent 3 from the lower part of container 4 to the upper part of infuser 8, and is controlled by signal S generated by the second unit 6. The solvent which exits pipe 10, illustrated by arrows A1, drops into infuser 8 where the brewing of ingredients is performed. The solvent in infuser 8 then drops back into container 4, which is illustrated by arrows A2. Pumping the solvent from the container 4 into the tube 10, infusing the ingredients in the infuser 8 with solvent contained in the infuser, and subsequently the solvent from the infuser dropping back into the container, constitutes a closed brewing cycle that is continued until the second unit 6 generates signal S indicating that the ingredients have to be separated from the solvent. Generation of signal S is thus used to stop the pump 9, resulting in the situation that the ingredients are separated from the solvent by stopping the brewing cycle.

Another approach could also be used to separate ingredients from the solvent. For example, in a system as described in Fig. 1, when the second unit 6 generates signal S indicating that the ingredients have to be separated from the solvent, this signal could trigger a visual indication (e.g. a light) or a sound indication (e.g. via a speaker) informing the user to manually take the ingredients out of the container 4.

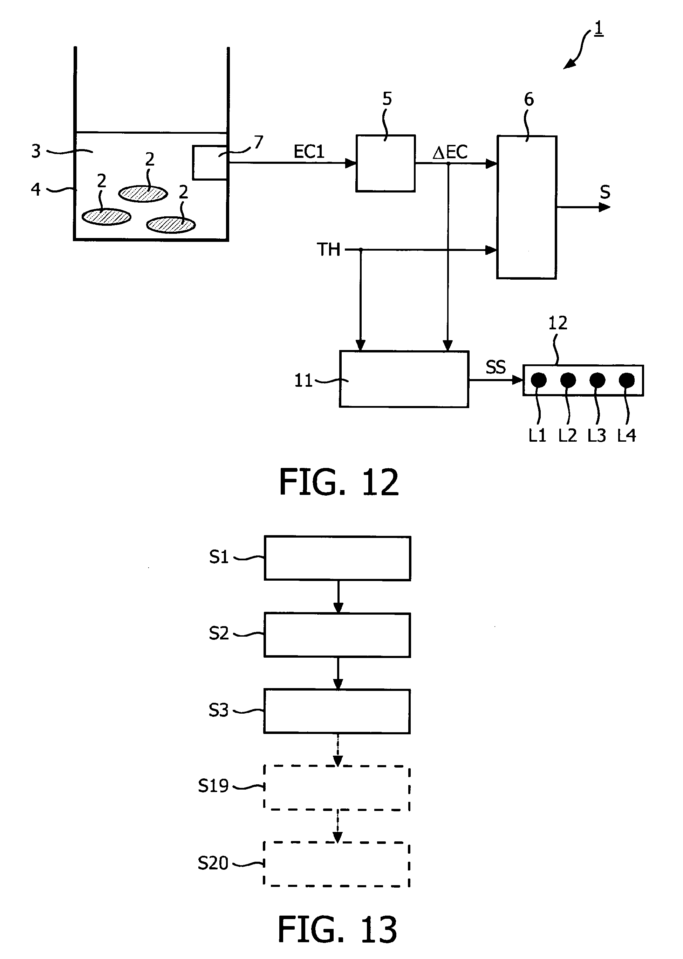

According to a preferred embodiment based on Fig.1, Fig.12 depicts a system 1 according to the invention, further comprising a third unit 11 adapted to generate a signal SS reflecting the progress of the brewing, based on a ratio between said change of the electro-conductivity $\Delta EC$ and said predetermined threshold TH. For example, signal SS is calculated as SS = $\Delta EC$ / TH. This signal may advantageously be used to control a set of visual indicators placed on a user interface 12. For example, if four visual indicators L1-L2-L3-L4, for example light emitting diodes (LED), are used, the visual indicators can be controlled by the third unit 11 as follows:

- when 0% < SS < 25% , no visual indicators are switched-on
- when 25% ≤ SS < 50% , visual indicator L1 is switched-on, reflecting a progress of at least 25% of the brewing (i.e. at least 25% of the brewing has been performed)
- when 50% ≤ SS < 75% , visual indicators L1 and L2 are switched-on, reflecting a progress of at least 50% of the brewing (i.e. at least 50% of the brewing has been performed)
- when 75% ≤ SS < 100% , visual indicators L1, L2 and L3 are switched-on, reflecting a progress of at least 75% of the brewing (i.e. at least 75% of the brewing has been performed)
- when SS = 100% , visual indicators L1, L2, L3 and L4 are switched-on, reflecting that the brewing operation is finished.

It is to be understood that a different number of visual indicators could be used similarly without departing from the scope of the invention, so as to give an indication of the brewing progress with a different accuracy.

Fig.9 depicts a first apparatus APP according to the invention for preparing a beverage by brewing ingredients 2 in a solvent 3. Although this apparatus is described based on the system of Fig.8, it could also be based on a system as described in Fig.1 or Fig.6. In addition, this apparatus also comprises:

- a memory MEM1 for storing a plurality of thresholds (TH1, TH2, TH3), each threshold being associated with a given type of ingredients (T1, T2, T3),
- means SEL1 for selecting a type of ingredients to be brewed,
- means SET1 for setting the predetermined threshold TH to the value of the threshold associated with the selected type of ingredients.

The plurality of thresholds (TH1, TH2, TH3) may correspond to thresholds according to mode 1, mode 2 and/or mode 3. It is noted that only three thresholds are used in this description, but the number of thresholds could be different without departing from the scope of the invention. Thresholds are experimentally defined as previously described. For example:

- TH1 is associated with the brewing of green tea as the ingredient, in water as the solvent,
- TH2 is associated with the brewing of black tea as the ingredient, in water as the solvent,
- TH3 is associated with the brewing of oolong tea as the ingredient, in water as the solvent.

The means SEL1 for selecting a type of ingredients may correspond to a mechanical switch or a digital switch placed on the body (not shown) of the apparatus. For example, the user can select the ingredients to be brewed, either by rotating a mechanical switch until the switch faces the desired ingredients illustrated as a pictogram or text on the apparatus body, or by scrolling in a menu displayed on an LCD display (not shown) until the desired ingredients illustrated as a pictogram or text are displayed on the display.

The means SET1 for setting the predetermined threshold TH may correspond to a mechanical switch following the movement of the mechanical switch SEL1 (which is illustrated by dotted lines joining the means SEL1 and the means SET1). Alternatively, this can be performed digitally by converting the selection made by the user on the LCD display into an address sent directly to the memory MEM1.

According to this apparatus, the ingredients are separated from the solvent, without any further user actions being required, as soon as the solvent has reached a concentration of dissolved solids/compounds which is optimal for the type of selected ingredients. The beverage prepared by this apparatus corresponds to the solvent after the ingredients have been separated.

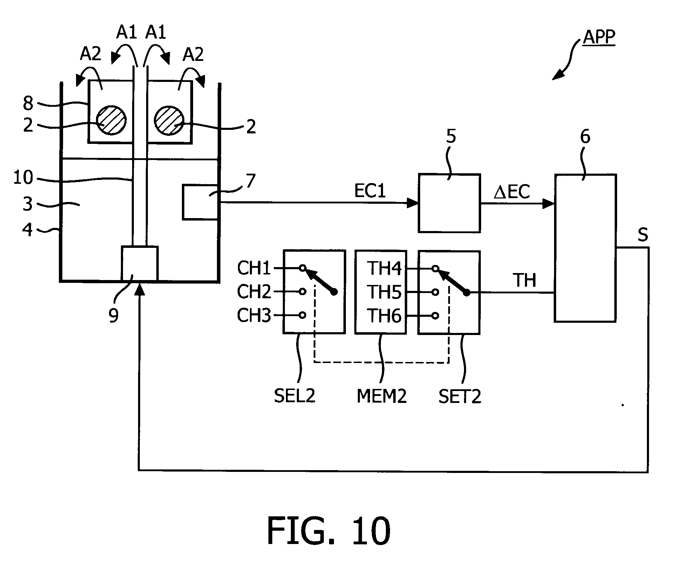

Fig.10 depicts a second apparatus APP according to the invention for preparing a beverage by brewing ingredients 2 in a solvent 3. Although this apparatus is described based on Fig.8, it could also be based on Fig.6. In addition, this apparatus comprises:

- a memory MEM2 for storing a plurality of thresholds (TH4, TH5, TH6) each reflecting a different characteristic (CH1, CH2, CH3) of the beverage to be prepared,
- means SEL2 for selecting a characteristic of the beverage to be prepared,
- means SET2 for setting the predetermined threshold TH to the value of the threshold associated with the selected characteristic.

The plurality of thresholds (TH4, TH5, TH6) may correspond to thresholds according to mode 1, mode 2 and/or mode 3. It is noted that only three thresholds are used in this description, but the number of thresholds could be different without departing from the scope of the invention. Thresholds are experimentally defined as previously described. Thresholds reflect characteristics of a given ingredient to be brewed, such as bitterness, strength, sweetness... For example:

- TH4 reflects a light taste strength, for the brewing of black tea as the ingredient, in water as the solvent,
- TH5 reflects a medium taste strength, for the brewing of black tea as the ingredient, in water as the solvent,
- TH6 reflects a strong taste strength, for the brewing of black tea as the ingredient, in water as the solvent.

The means SEL2 for selecting the characteristic of the beverage to be prepared may correspond to a mechanical switch or a digital switch placed on the body (not shown) of the apparatus. For example, the user can select the characteristic of the ingredients to be brewed, either by rotating a mechanical switch until the switch faces the desired characteristic illustrated as a pictogram or text on the apparatus body, or by scrolling in a menu displayed on an LCD display (not shown) until the desired characteristic illustrated as a pictogram or text on the display is shown.

The means SET2 for setting the predetermined threshold TH may correspond to a mechanical switch following the movement of the mechanical switch SEL2 (which is illustrated by dotted lines joining the means SEL2 and the means SET2). Alternatively, this can be performed digitally by converting the selection made by the user on the LCD display into an address sent directly to the memory MEM2.

According to this apparatus, the ingredients are separated from the solvent, without any further user actions being required, as soon as the solvent has reached a concentration of dissolved solids/compounds which matches the characteristic of the beverage selected by the user. The beverage prepared by this apparatus corresponds to the solvent after the ingredients have been separated.

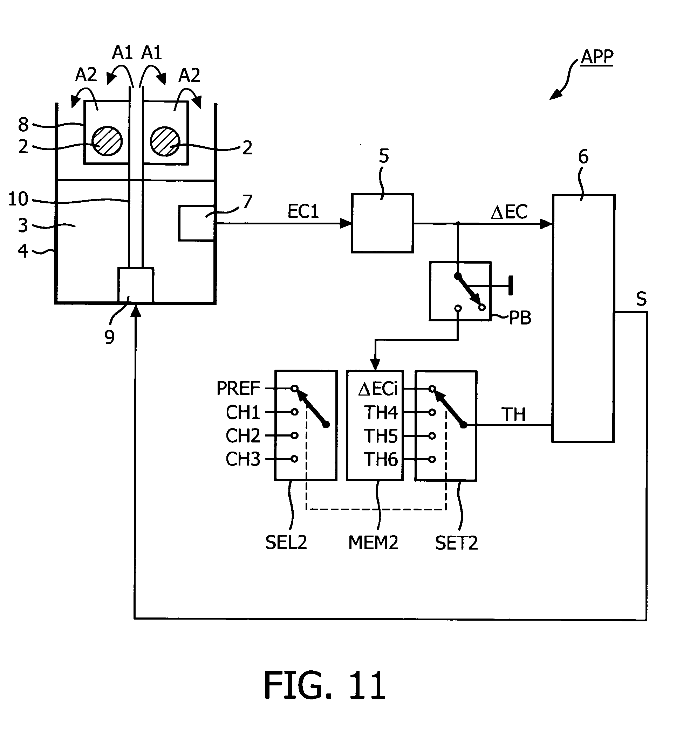

Fig.11 depicts a third apparatus APP according to the invention for preparing a beverage by brewing ingredients 2 in a solvent 3. This apparatus is described based on the apparatus of Fig.10, and with reference to Fig.3. In addition, this apparatus also comprises:

- a first unit 5 for measuring a variation of the electro-conductivity $\Delta EC$ of said solvent, defined as the difference between the electro-conductivity $EC\_t1$ of the solvent at the time t1 of measurement by the first unit, and the electro-conductivity $EC\_t0$ of the solvent at the starting time t0 of the brewing operation.
- means BP for storing said variation of the electro-conductivity $\Delta EC$ in a memory MEM2, said variation being intended to be compared to a change of the electro-conductivity of the solvent during a next brewing of the same ingredients, to generate a signal S indicating that the ingredients should be separated from the solvent.

The first unit 5 is adapted to measure the variation of the electro-conductivity $\Delta EC$ as follows:

$$\Delta EC = (EC\_t1 - EC\_t0)$$

Means for storing the variation of the electro-conductivity $\Delta EC$ comprise means BP, for example a push-button, for triggering the storing of a given variation of the electro-conductivity $\Delta EC = \Delta ECi$, and a memory MEM2 to store this variation $\Delta ECi$. During the brewing of a given ingredient in a given solvent, independently of having selected a given characteristic (CH1, CH2, CH3) of the beverage to be prepared, a user may check from time to time the characteristics of the solvent (e.g. taste characteristics such as bitterness, sweetness, strength...), for example by drinking a sample of the solvent. If the user is satisfied with the characteristics of the solvent, the user activates the means BP so that the variation $\Delta ECi$ is stored in memory MEM2. During a next brewing of the same ingredients, if the user wants that the beverage to be prepared has the same characteristics as the beverage prepared in a previous brewing, the user may select, by selecting means SEL2, the corresponding characteristic PREF, which allows setting the predefined threshold TH such that TH = $\Delta ECi$.

Fig.13 depicts a method according to the invention of brewing ingredients in a solvent, said method comprising the steps of:

- measuring S1 a change of the electro-conductivity $\Delta EC$ of said solvent,
- comparing S2 said change of the electro-conductivity $\Delta EC$ with a predetermined threshold TH, to generate a signal S indicating that the ingredients should be separated from the solvent.
- separating S3, based on said signal S, ingredients from the solvent.

This method corresponds to steps carried out in a system according to Fig.1.

Advantageously, the method according to the invention further comprises the steps of:

- measuring S19, after the step S3 of separating the ingredients from the solvent, a subsequent change of the electro-conductivity $\Delta EC$ of the solvent, said subsequent change of the electro-conductivity $\Delta EC$ being defined as the difference between the electro-conductivity $EC\_t5$ of the solvent at the time t5 of separating the ingredients from the solvent, and the electro-conductivity $EC\_t6$ of the solvent at a subsequent time t6;

- comparing S20 said subsequent change of the electro-conductivity ΔEC with an additional predetermined threshold TH7, to generate a signal S1 indicating that a property of the solvent reflecting the solvent quality , has changed.

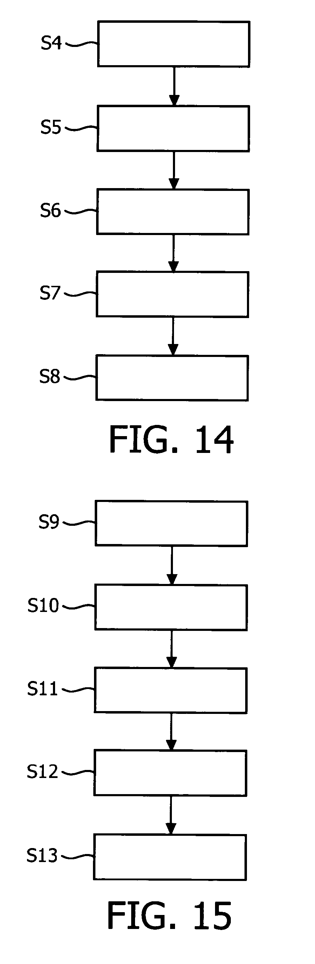

Fig.14 depicts a method according to the invention of preparing a beverage by brewing ingredients in a solvent, said method comprising the steps of:

- selecting S4 a type of ingredients to be brewed,
- putting S5 the selected type of ingredients in the solvent,
- measuring S6 a change of the electro-conductivity ΔEC of said solvent,
- comparing S7 said change of the electro-conductivity ΔEC with a predetermined threshold TH associated with the selected type of ingredients, to generate a signal S indicating that the ingredients should be separated from the solvent,
- separating S8, based on said signal S, ingredients from the solvent.

This method corresponds to steps carried out in an apparatus according to Fig.9.

Fig.15 depicts a method according to the invention of preparing a beverage by brewing ingredients in a solvent, said method comprising the steps of:

- selecting S9 a characteristic of the beverage to be prepared,
- putting S10 the ingredients in the solvent,
- measuring S11a change of the electro-conductivity ΔEC of said solvent,
- comparing S12 said change of the electro-conductivity ΔEC with a predetermined threshold TH associated with the selected characteristic, to generate a signal S indicating that the ingredients should be separated from the solvent,
- separating S13, based on said signal S, ingredients from the solvent.

This method corresponds to steps carried out in an apparatus according to Fig.10.

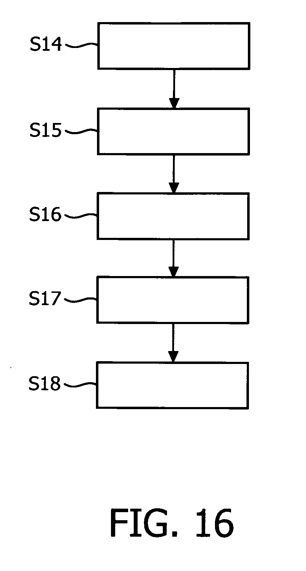

Fig.16 depicts a method according to the invention of preparing a beverage by brewing ingredients in a solvent, said method comprising the steps of:

- putting S14 a given type of ingredients in the solvent,
- measuring S15 a variation of the electro-conductivity of said solvent, defined as the difference between the electro-conductivity of the solvent at the time of measurement, and the electro-conductivity of the solvent at the starting time of the brewing operation.
- storing S16 said variation of the electro-conductivity ΔEC in a memory,
- comparing S 17, during a next brewing of the same type of ingredients, said variation with a change of the electro-conductivity of the solvent, to generate a signal S indicating that the ingredients should be separated from the solvent.
- separating S18, based on said signal S, ingredients from the solvent.

This method corresponds to steps carried out in an apparatus according to Fig.11.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage. Any reference signs in the claims should not be construed as limiting the scope thereof.

**Claims**

1. System (1) for brewing ingredients in a solvent, said system comprising:

    - a first unit (5) for measuring a change of the electro-conductivity (ΔEC) of said solvent,
    - a second unit (6) for comparing said change of the electro-conductivity (ΔEC) with a predetermined threshold (TH), to generate a signal (S) indicating that the ingredients should be separated from the solvent, **characterised in that** said

    first unit (5) is adapted to measure a change of the electro-conductivity (ΔEC), defined as the ratio of:

    - the difference between the electro-conductivity (EC_t3) of the solvent at the time (t3) of measurement by the first unit, and the electro-conductivity (EC_t2) of the solvent at a previous time (t2) of measurement by the first unit, to
    - the difference between the time (t3) of measurement by the first unit, and said previous time (t2) of measurement.

2. System as claimed in claim 1, wherein said previous time (t2) of measurement is the starting time (t0) of the brewing operation.

3. System as claimed in any one of claims 1 to 2, further comprising a system connected to said second unit (6) for separating, upon the generation of said signal, the ingredients from the solvent.

**4.** System as claimed in claim 3, wherein said first unit (5) is further adapted to measure a subsequent change of the electro-conductivity (∆EC) of the solvent, said subsequent change of the electro-conductivity (∆EC) being defined as the difference between the electro-conductivity (EC_t5) of the solvent at the time (t5) of separating the ingredients from the solvent, and the electro-conductivity (EC_t6) of the solvent at a subsequent time (t6); and wherein said second unit (6) is further adapted to compare said subsequent change of the electro-conductivity (∆EC) with an additional predetermined threshold (TH7), to generate a signal (S1) indicating that a property of the solvent reflecting the solvent quality, has changed.

**5.** System as claimed in any one of claims 1 to 2, further comprising a third unit (11) adapted to generate a signal (SS) reflecting the progress of the brewing operation, based on a ratio between said change of the electro-conductivity (∆EC) and said predetermined threshold (TH).

**6.** Apparatus (APP) for preparing a beverage by brewing ingredients (2) in a solvent (3), said apparatus comprising a system as claimed in any one of claims 1 to 5.

**7.** Apparatus (APP) as claimed in claim 6, further comprising:

- a memory (MEM1) for storing a plurality of thresholds (TH1, TH2, TH3), each threshold being associated with a given type of ingredients (T1, T2, T3),
- means (SEL1) for selecting a type of ingredients to be brewed,
- means (SET1) for setting the predetermined threshold (TH) to the value of the threshold associated with the selected type of ingredients.

**8.** Apparatus (APP) as claimed in claim 6, further comprising:

- a memory (MEM2) for storing a plurality of thresholds (TH4, TH5, TH6) each reflecting a different characteristic (CH1, CH2, CH3) of the beverage to be prepared,
- means (SEL2) for selecting a characteristic of the beverage to be prepared,
- means (SET2) for setting the predetermined threshold (TH) to the value of the threshold associated with the selected characteristic.

**9.** Apparatus (APP) as claimed in claim 6 in so far as dependent on claim 2, further comprising:

- means (BP) for storing said change of the electro-conductivity (∆EC) in a memory (MEM2), said change being intended to be compared to a change of the electro-conductivity of the solvent during a next brewing of the same ingredients, to generate a signal (S) indicating that the ingredients should be separated from the solvent.

**10.** Method of brewing ingredients in a solvent, said method comprising the steps of:

- measuring (S1, S6, S11, S 15) a change of the electro-conductivity (∆EC) of said solvent,
- comparing (S2, S7, S12, S17) said change of the electro-conductivity (∆EC) with a predetermined threshold (TH),
- based on said comparing, generating a signal (S) indicating that the ingredients should be separated from the solvent,

wherein the change of the electro-conductivity (∆EC) is defined as the ratio of:

- the difference between the electro-conductivity (EC_t3) of the solvent at the time (t3) of measuring (S1, S6, S11, S15), and the electro-conductivity (EC_t2) of the solvent at a previous time (t2) of measuring, to
- the difference between the time (t3) of measuring, and said previous time (t2) of measuring.

**11.** Method as claimed in claim 10, further comprising:

- separating (S3), based on said signal (S), the ingredients from the solvent,
- measuring (S 19), after the step (S3) of separating the ingredients from the solvent, a subsequent change of the electro-conductivity (∆EC) of the solvent, said subsequent change of the electro-conductivity (∆EC) being defined as the difference between the electro-conductivity (EC_t5) of the solvent at the time (t5) of separating the ingredients from the solvent, and the electro-conductivity (EC_t6) of the solvent at a subsequent time (t6);
- comparing (S20) said subsequent change of the electro-conductivity (∆EC) with an additional predetermined threshold (TH7), to generate a signal (S1) indicating that a property of the solvent reflecting the solvent quality has changed.

**12.** Method as claimed in claim 10, further comprising, before the step of measuring (S6) the change of the electro-conductivity (∆EC) of said solvent:

- selecting (S4) a type of ingredients to be brewed,
- putting (S5) the selected type of ingredients in the solvent,

and after the step of generating the signal (S):

- separating (S8), based on said signal (S), the ingredients from the solvent,

wherein in the step of comparing (S7) said change of the electro-conductivity (∆EC), the predetermined threshold is associated with the selected type of ingredients.

13. Method as claimed in claim 10, further comprising, before the step of measuring (S11) the change of the electro-conductivity (∆EC) of said solvent:

- selecting (S9) a characteristic of the beverage to be prepared,
- putting (S10) the ingredients in the solvent,

and after the step of generating the signal (S):

- separating (S 13), based on said signal (S), the ingredients from the solvent,

wherein in the step of comparing (S12) said change of the electro-conductivity (∆EC), the predetermined threshold is associated with the selected characteristic.

14. Method as claimed in claim 10, further comprising, before the step of measuring (S 15) the change of the electro-conductivity (∆EC) of said solvent:

- putting (S 14) a given type of ingredients in the solvent,

and after the step of measuring (S 15) the change of the electro-conductivity (∆EC) of said solvent and before the step of comparing (S17) said change of the electro-conductivity (∆EC):

- storing (S16) said change of the electro-conductivity ∆EC in a memory,

and after the step of generating the signal (S):

- separating (S18), based on said signal (S), the ingredients from the solvent,

wherein in the step of measuring (S 15) the change of the electro-conductivity (∆EC) of said solvent, said previous time (t2) of measurement is the starting time (t0) of the brewing operation, and wherein the step of comparing (S 17) comprises, during a next brewing of the same type of ingredients, comparing a change of the electro-conductivity of the solvent with the change stored in the memory, to generate the signal (S) indicating that the ingredients should be separated from the solvent.

**Patentansprüche**

1. System (1) zum Brühen von Inhaltsstoffen in einem Lösungsmittel, wobei das System Folgendes umfasst:

- eine erste Einheit (5) zum Messen einer Änderung der elektrischen Leitfähigkeit (∆EC) des Lösungsmittels,
- eine zweite Einheit (6) zum Vergleichen der Änderung der elektrischen Leitfähigkeit (∆EC) mit einem vorausbestimmten Grenzwert (TH), um ein Signal (S) zu erzeugen, das anzeigt, dass die Inhaltsstoffe vom Lösungsmittel getrennt werden sollen, **dadurch gekennzeichnet, dass** die erste Einheit (5) angepasst ist, um eine Änderung der elektrischen Leitfähigkeit (∆EC) zu messen, definiert als das Verhältnis von:
- der Differenz zwischen der elektrischen Leitfähigkeit (EC_t3) des Lösungsmittels zum Zeitpunkt (t3) der Messung durch die erste Einheit und der elektrischen Leitfähigkeit (EC_t2) des Lösungsmittels zu einem vorherigen Zeitpunkt (t2) der Messung durch die erste Einheit, zu
- der Differenz zwischen dem Zeitpunkt (t3) der Messung durch die erste Einheit und dem vorherigen Zeitpunkt (t2) der Messung.

2. System nach Anspruch 1, wobei der vorherige Zeitpunkt (t2) der Messung die Startzeit (t0) des Brühvorgangs ist.

3. System nach einem der Ansprüche 1 bis 2, ferner umfassend ein System, das mit der zweiten Einheit (6) verbunden ist, zum Trennen der Inhaltsstoffe vom Lösungsmittel nach Erzeugung des Signals.

4. System nach Anspruch 3, wobei die erste Einheit (5) ferner angepasst ist, um eine nachfolgende Änderung der elektrischen Leitfähigkeit (∆EC) des Lösungsmittels zu messen, wobei die nachfolgende Änderung der elektrischen Leitfähigkeit (∆EC) definiert ist als die Differenz zwischen der elektrischen Leitfähigkeit (EC_t5) des Lösungsmittels zum Zeitpunkt (t5) der Trennung der Inhaltsstoffe vom Lösungsmittel und der elektrischen Leitfähigkeit (EC_t6) des Lösungsmittels zu einem nachfolgenden Zeitpunkt (t6); und wobei die zweite Einheit (6) ferner angepasst ist, um die nachfolgende Änderung der elektrischen Leitfähigkeit (∆EC) mit einem zusätzlichen vorausbestimmten Grenzwert (TH7) zu vergleichen, um ein Signal (S1) zu erzeugen, das anzeigt, dass sich eine Eigenschaft des Lösungsmittels, welche die Lösungsmittelqualität widerspielgelt, geändert hat.

**5.** System nach einem der Ansprüche 1 bis 2, ferner umfassend eine dritte Einheit (11), die angepasst ist, um ein Signal (SS) zu erzeugen, das den Fortschritt des Brühvorgangs widerspiegelt, basierend auf einem Verhältnis zwischen der Änderung der elektrischen Leitfähigkeit (ΔEC) und dem vorausbestimmten Grenzwert (TH).

**6.** Gerät (APP) für die Zubereitung eines Getränks durch Brühen von Inhaltsstoffen (2) in einem Lösungsmittel (3), wobei das Gerät ein System nach einem der Ansprüche 1 bis 5 umfasst.

**7.** Gerät (APP) nach Anspruch 6, ferner umfassend:

- einen Speicher (MEM1) zum Speichern einer Vielzahl von Grenzwerten (TH1, TH2, TH3), wobei jeder Grenzwert einer gegebenen Art von Inhaltsstoffen (T1, T2, T3) zugeordnet ist,
- Mittel (SEL1) zum Auswählen einer Art von Inhaltsstoffen, die zu brühen sind,
- Mittel (SET1) zum Setzen des vorausbestimmten Grenzwerts (TH) auf jenen Wert des Grenzwerts, der der ausgewählten Art von Inhaltsstoffen zugeordnet ist.

**8.** Gerät (APP) nach Anspruch 6, ferner umfassend:

- einen Speicher (MEM2) zum Speichern einer Vielzahl von Grenzwerten (TH4, TH5, TH6), die jeweils ein unterschiedliches Merkmal (CH1, CH2, CH3) des zuzubereitenden Getränks widerspiegeln,
- Mittel (SEL2) zum Auswählen eines Merkmals des zuzubereitenden Getränks,
- Mittel (SET2) zum Setzen des vorausbestimmten Grenzwerts (TH) auf jenen Wert des Grenzwerts, der dem ausgewählten Merkmal zugeordnet ist.

**9.** Gerät (APP) nach Anspruch 6, insofern als abhängig von Anspruch 2, ferner umfassend:

- Mittel (BP) zum Speichern der Änderung der elektrischen Leitfähigkeit (ΔEC) in einem Speicher (MEM2), wobei die Änderung mit einer Änderung der elektrischen Leitfähigkeit des Lösungsmittels während eines folgenden Brühens der gleichen Inhaltsstoffe verglichen werden soll, um ein Signal (S) zu erzeugen, das anzeigt, dass die Inhaltsstoffe vom Lösungsmittel getrennt werden sollen.

**10.** Verfahren zum Brühen von Inhaltsstoffen in einem Lösungsmittel, wobei das Verfahren folgende Schritte umfasst:

- Messen (S1, S6, S11, S15) einer Änderung der elektrischen Leitfähigkeit (ΔEC) des Lösungsmittels,
- Vergleichen (S2, S7, S 12, S 17) der Änderung der elektrischen Leitfähigkeit (ΔEC) mit einem vorausbestimmten Grenzwert (TH),
- basierend auf dem Vergleich, Erzeugen eines Signals (S), das anzeigt, dass die Inhaltsstoffe vom Lösungsmittel getrennt werden sollen,

wobei die Änderung der elektrischen Leitfähigkeit (ΔEC) definiert ist als das Verhältnis von:

- der Differenz zwischen der elektrischen Leitfähigkeit (EC_t3) des Lösungsmittels zum Zeitpunkt (t3) der Messung (S1, S6, S11, S 15) und der elektrischen Leitfähigkeit (EC_t2) des Lösungsmittels zu einem vorherigen Zeitpunkt (t2) der Messung, zu
- der Differenz zwischen dem Zeitpunkt (t3) der Messung und dem vorherigen Zeitpunkt (t2) der Messung.

**11.** Verfahren nach Anspruch 10, ferner umfassend:

- Trennen (S3) der Inhaltsstoffe vom Lösungsmittel basierend auf dem Signal (S),
- nach dem Schritt (S3) des Trennens der Inhaltsstoffe vom Lösungsmittel, Messen (S 19) einer nachfolgenden Änderung der elektrischen Leitfähigkeit (ΔEC) des Lösungsmittels, wobei die nachfolgende Änderung der elektrischen Leitfähigkeit (ΔEC) definiert ist als die Differenz zwischen der elektrischen Leitfähigkeit (EC_t5) des Lösungsmittels zum Zeitpunkt (t5) der Trennung der Inhaltsstoffe vom Lösungsmittel und der elektrischen Leitfähigkeit (EC_t6) des Lösungsmittels zu einem nachfolgenden Zeitpunkt (t6);
- Vergleichen (S20) der nachfolgenden Änderung der elektrischen Leitfähigkeit (ΔEC) mit einem zusätzlichen vorausbestimmten Grenzwert (TH7), um ein Signal (S1) zu erzeugen, das anzeigt, dass sich eine Eigenschaft des Lösungsmittels, welche die Lösungsmittelqualität widerspielgelt, geändert hat.

**12.** Verfahren nach Anspruch 10, ferner umfassend, vor dem Schritt des Messens (S6) der Änderung der elektrischen Leitfähigkeit (ΔEC) des Lösungsmittels:

- Auswählen (S4) einer Art von Inhaltsstoffen, die zu brühen sind,
- Hineingeben (S5) der ausgewählten Art von Inhaltsstoffen in das Lösungsmittel,

**12**

und nach dem Schritt des Erzeugens des Signals (S):

- Trennen (S8) der Inhaltsstoffe vom Lösungsmittel basierend auf dem Signal (S), wobei im Schritt des Vergleichens (S7) der Änderung der elektrischen Leitfähigkeit (ΔEC) der vorausbestimmte Grenzwert der ausgewählten Art von Inhaltsstoffen zugeordnet wird.

13. Verfahren nach Anspruch 10, ferner umfassend, vor dem Schritt des Messens (S11) der Änderung der elektrischen Leitfähigkeit (ΔEC) des Lösungsmittels:

- Auswählen (S9) eines Merkmals des zuzubereitenden Getränks,
- Hineingeben (S10) der Inhaltsstoffe in das Lösungsmittel,

und nach dem Schritt des Erzeugens des Signals (S):

- Trennen (S 13) der Inhaltsstoffe vom Lösungsmittel basierend auf dem Signal (S), wobei im Schritt des Vergleichens (S 12) der Änderung der elektrischen Leitfähigkeit (ΔEC) der vorausbestimmte Grenzwert dem ausgewählten Merkmal zugeordnet wird.

14. Verfahren nach Anspruch 10, ferner umfassend, vor dem Schritt des Messens (S 15) der Änderung der elektrischen Leitfähigkeit (ΔEC) des Lösungsmittels:

- Hineingeben (S 14) einer gegebenen Art von Inhaltsstoffen in das Lösungsmittel,

und nach dem Schritt des Messens (S 15) der Änderung der elektrischen Leitfähigkeit (ΔEC) des Lösungsmittels und vor dem Schritt des Vergleichens (S 17) der Änderung der elektrischen Leitfähigkeit (ΔEC):

- Speichern (S16) der elektrischen Leitfähigkeit (ΔEC) in einem Speicher, und nach dem Schritt des Erzeugens des Signals (S):
- Trennen (S18) der Inhaltsstoffe vom Lösungsmittel basierend auf dem Signal (S),

wobei im Schritt des Messens (S 15) der Änderung der elektrischen Leitfähigkeit (ΔEC) des Lösungsmittels der vorherige Zeitpunkt (t2) der Messung die Startzeit (t0) des Brühvorgangs ist, und wobei der Schritt des Vergleichens (S17) während eines folgenden Brühens der gleichen Art von Inhaltsstoffen das Vergleichen einer Änderung der elektrischen Leitfähigkeit des Lösungsmittels mit der im Speicher gespeicherten Änderung umfasst, um das Signal (S) zu erzeugen, das anzeigt, dass die Inhaltsstoffe vom Lösungsmittel getrennt werden sollen.

**Revendications**

1. Système (1) pour brasser des ingrédients dans un solvant, ledit système comprenant :

- une première unité (5) pour mesurer un changement de l'électro-conductivité (ΔEC) dudit solvant,
- une deuxième unité (6) pour comparer ledit changement de l'électro-conductivité (ΔEC) à un seuil prédéterminé (TH), pour générer un signal (S) indiquant que les ingrédients doivent être séparés du solvant, **caractérisé en ce que** ladite première unité (5) est adaptée pour mesurer un changement de l'électro-conductivité (ΔEC), défini comme étant le rapport de :
- la différence entre l'électro-conductivité (EC_t3) du solvant au temps (t3) de mesure par la première unité, et l'électro-conductivité (EC_t2) du solvant à un temps précédent (t2) de mesure par la première unité, par rapport à
- la différence entre le temps (t3) de mesure par la première unité, et ledit temps précédent (t2) de mesure.

2. Système selon la revendication 1, dans lequel ledit temps précédent (t2) de mesure est le temps de commencement (t0) de l'opération de brassage.

3. Système selon l'une quelconque des revendications 1 à 2, comprenant en outre un système raccordé à ladite deuxième unité (6) pour séparer, lors de la génération dudit signal, les ingrédients, du solvant.

4. Système selon la revendication 3, dans lequel ladite première unité (5) est en outre adaptée pour mesurer un changement subséquent de l'électro-conductivité (ΔEC) du solvant, ledit changement subséquent de l'électro-conductivité (ΔEC) étant défini comme étant la différence entre l'électro-conductivité (EC_t5) du solvant au temps (t5) de la séparation des ingrédients, du solvant, et l'électro-conductivité (EC_t6) du solvant à un temps subséquent (t6) ; et dans lequel ladite deuxième unité (6) est en outre adaptée pour comparer ledit changement subséquent de l'électro-conductivité (ΔEC) à un seuil prédéterminé supplémentaire (TH7), pour générer un signal (S1) indiquant qu'une propriété du solvant reflétant la qualité de solvant, a changé.

5. Système selon l'une quelconque des revendications 1 à 2, comprenant en outre une troisième unité (11) adaptée pour générer un signal (SS) reflétant le progrès de l'opération de brassage, en fonction d'un rapport entre ledit changement de l'électro-conductivité ($\Delta$EC) et ledit seuil prédéterminé (TH).

6. Appareil (APP) pour préparer une boisson en brassant des ingrédients (2) dans un solvant (3), ledit appareil comprenant un système selon l'une quelconque des revendications 1 à 5.

7. Appareil (APP) selon la revendication 6, comprenant en outre :

   - une mémoire (MEM1) pour stocker une pluralité de seuils (TH1, TH2, TH3), chaque seuil étant associé à un type donné d'ingrédients (T1, T2, T3),
   - des moyens (SEL1) pour sélectionner un type d'ingrédients destinés à être brassés,
   - des moyens (SET1) pour régler le seuil prédéterminé (TH) à la valeur du seuil associé au type sélectionné d'ingrédients.

8. Appareil (APP) selon la revendication 6, comprenant en outre :

   - une mémoire (MEM2) pour stocker une pluralité de seuils (TH4, TH5, TH6), chacun reflétant une caractéristique différente (CHI, CH2, CH3) de la boisson destinée à être préparée,
   - des moyens (SEL2) pour sélectionner une caractéristique de la boisson destinée à être préparée,
   - des moyens (SET2) pour régler le seuil prédéterminé (TH) à la valeur du seuil associé à la caractéristique sélectionnée.

9. Appareil (APP) selon la revendication 6, dans la mesure où elle dépend de la revendication 2, comprenant en outre :

   - des moyens (BP) pour stocker ledit changement de l'électro-conductivité ($\Delta$EC) dans une mémoire (MEM2), ledit changement étant prévu pour être comparé à un changement de l'électro-conductivité du solvant durant un brassage suivant des mêmes ingrédients, pour générer un signal (S) indiquant que les ingrédients doivent être séparés du solvant.

10. Procédé de brassage d'ingrédients dans un solvant, ledit procédé comprenant les étapes de :

    - la mesure (S1, S6, S11, S15) d'un changement de l'électro-conductivité ($\Delta$EC) dudit solvant,
    - la comparaison (S2, S7, S12, S 17) dudit changement de l'électro-conductivité ($\Delta$EC) à un seuil prédéterminé (TH),
    - en fonction de ladite comparaison, la génération d'un signal (S) indiquant que les ingrédients doivent être séparés du solvant,

dans lequel le changement de l'électro-conductivité ($\Delta$EC) est défini comme étant le rapport de :

   - la différence entre l'électro-conductivité (EC_t3) du solvant au temps (t3) de la mesure (S1, S6, S11, S15), et l'électro-conductivité (EC_t2) du solvant à un temps précédent (t2) de la mesure, par rapport à
   - la différence entre le temps (t3) de la mesure, et ledit temps précédent (t2) de la mesure.

11. Procédé selon la revendication 10, comprenant en outre :

    - la séparation (S3), en fonction dudit signal (S), des ingrédients, du solvant,
    - la mesure (S19), après l'étape (S3) de la séparation des ingrédients, du solvant, d'un changement subséquent de l'électro-conductivité ($\Delta$EC) du solvant, ledit changement subséquent de l'électro-conductivité ($\Delta$EC) étant défini comme étant la différence entre l'électro-conductivité (EC_t5) du solvant au temps (t5) de la séparation des ingrédients, du solvant, et l'électro-conductivité (EC_t6) du solvant à un temps subséquent (t6) ;
    - la comparaison (S20) dudit changement subséquent de l'électro-conductivité ($\Delta$EC) à un seuil prédéterminé supplémentaire (TH7), pour générer un signal (S1) indiquant qu'une propriété du solvant reflétant la qualité de solvant a changé.

12. Procédé selon la revendication 10, comprenant en outre, avant l'étape de la mesure (S6) du changement de l'électro-conductivité ($\Delta$EC) dudit solvant :

    - la sélection (S4) d'un type d'ingrédients destinés à être brassés,
    - le placement (S5) du type sélectionné d'ingrédients dans le solvant,

    et, après l'étape de la génération du signal (S) :

    - la séparation (S8), en fonction dudit signal (S), des ingrédients, du solvant,

    dans lequel, dans l'étape de la comparaison (S7) dudit changement de l'électro-conductivité ($\Delta$EC), le seuil prédéterminé est associé au type sélectionné d'ingrédients.

13. Procédé selon la revendication 10, comprenant en outre, avant l'étape de la mesure (S11) du changement de l'électro-conductivité ($\Delta$EC) dudit solvant :

- la sélection (S9) d'une caractéristique de la boisson destinée à être préparée,
- le placement (S10) des ingrédients dans le solvant,

et, après l'étape de la génération du signal (S) :

- la séparation (S 13), en fonction dudit signal (S), des ingrédients, du solvant,

dans lequel, dans l'étape de la comparaison (S12) dudit changement de l'électro-conductivité ($\Delta$EC), le seuil prédéterminé est associé à la caractéristique sélectionnée.

14. Procédé selon la revendication 10, comprenant en outre, avant l'étape de la mesure (S15) du changement de l'électro-conductivité ($\Delta$EC) dudit solvant :

- le placement (S 14) d'un type donné d'ingrédients dans le solvant,

et, après l'étape de la mesure (S15) du changement de l'électro-conductivité ($\Delta$EC) dudit solvant et, avant l'étape de la comparaison (S17) dudit changement de l'électro-conductivité ($\Delta$EC) :

- le stockage (S16) dudit changement de l'électro-conductivité $\Delta$EC dans une mémoire,

et, après l'étape de la génération du signal (S) :

- la séparation (S 18), en fonction dudit signal (S), des ingrédients, du solvant,

dans lequel, dans l'étape de la mesure (S15) du changement de l'électro-conductivité ($\Delta$EC) dudit solvant, ledit temps précédent (t2) de mesure est le temps de commencement (t0) de l'opération de brassage,
et dans lequel l'étape de la comparaison (S17) comprend, durant un brassage suivant du même type d'ingrédients, la comparaison d'un changement de l'électro-conductivité du solvant au changement stocké dans la mémoire, pour générer le signal (S) indiquant que les ingrédients doivent être séparés du solvant.

## FIG. 1

EC-Brix

$y = 1046.6x + 51$
$R^2 = 0.9811$

## FIG. 2

FIG. 3

FIG. 4

FIG. 5

FIG. 6

FIG. 7

FIG. 8

FIG. 9

FIG. 10

FIG. 11

FIG. 12

FIG. 13

S4 □
↓
S5 □
↓
S6 □
↓
S7 □
↓
S8 □

## FIG. 14

S9 □
↓
S10 □
↓
S11 □
↓
S12 □
↓
S13 □

## FIG. 15

FIG. 16

**EP 2 654 523 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7036687 B1
- US 20010048958 A1
- US 20090263550 A1